# EUROPEAN PATENT APPLICATION

(11) **EP 2 897 024 A1**
(43) Date of publication of application: **22.07.2015**
(21) Application number: 14197608.4
(22) Date of filing: 12.12.2014
(51) Int. Cl.: G06F 1/32, G06K 15/00, H04N 1/00, G03G 15/00, G06F 3/12

(54) **Image forming apparatus and power supply control method thereof**

(30) Priority: 13.12.2013 JP 2013257574
(71) Applicant: Oki Data Corporation, Tokyo 108-8551 (JP)
(72) Inventor: Eguchi, Hiroshi, Tokyo, 108-8551 (JP)
(74) Representative: Piotrowicz, Pawel Jan Andrzej

(57) **Abstract**

An image forming apparatus includes a power supply unit supplied with power from outside and supplies the power to respective units of the apparatus, and a power control unit that controls the power supply unit and includes a power-supply-state storage unit that stores a power-supply-ON state or a power-supply-OFF state. The power supply unit is switchable between a first power supply mode to supply the power to all of the respective units of the apparatus, and a second power supply mode to supply the power to the power control unit. When the power supplied from outside is restarted after being shut off, the power control unit sets the power supply unit to the first power supply mode if the power-supply-state storage unit stores the power-supply-ON state, and sets the power supply unit to the second power supply mode if the power-supply-state storage unit stores the power-supply-OFF state.

## Description

### BACKGROUND OF THE INVENTION

The present invention relates to an image forming apparatus and a power supply control method thereof.

A general image forming apparatus such as a printer has an automatic-power-OFF function, i.e., a function to automatically turn off power supply to respective units of the image forming apparatus when the image forming apparatus is not operated for a predetermined time period (see, for example, Japanese Application Publication No. 2012-206428).

Conventionally, if power supply is shut off for reasons (for example, power outage) other than the automatic-power-OFF function, the image forming apparatus cannot restore a previous operating state (i.e., an operating state before the power supply is shut off), and therefore usability of the image forming apparatus is not good.

Therefore, there is a need for an image forming apparatus with better usability.

### SUMMARY OF THE INVENTION

According to an aspect of the present invention, there is provided an image forming apparatus connected to a communication network. The image forming apparatus includes a power supply unit supplied with power from outside and supplies the power to respective units of the image forming apparatus, and a power control unit that controls the power supply unit. The power control unit includes a power-supply-state storage unit that stores a power-supply-ON state or a power-supply-OFF state. The power supply unit is switchable between a first power supply mode in which the power supply unit supplies the power to all of the respective units of the image forming apparatus and a second power supply mode in which the power supply unit supplies the power to the power control unit. When the power supply from outside is shut off and then restarted, the power control unit sets the power supply unit to the first power supply mode if the power-supply-state storage unit stores the power-supply-ON state, and sets the power supply unit to the second power supply mode if the power-supply-state storage unit stores the power-supply-OFF state.

With such a configuration, it becomes possible to enhance usability of the image forming apparatus.

According to another aspect of the present invention, there is provided a power supply control method of an image forming apparatus connected to a communication network. The image forming apparatus includes a power supply unit supplied with power from outside and supplies the power to respective units of the image forming apparatus, and a power control unit that controls the power supply unit. The power supply unit is switchable between a first power supply mode in which the power supply unit supplies the power to all of the respective units of the image forming apparatus and a second power supply mode in which the power supply unit supplies the power to the power control unit. The method includes the steps of storing a power-supply-ON state or a power-supply-OFF state in a power-supply-state storage unit provided in the power control unit, determining whether the power-supply-state storage unit stores the power-supply-ON state or the power-supply-OFF state, when the power supplied from outside is restarted after being shut off, and setting the power supply unit to the first power supply mode if the power-supply-state storage unit stores the power-supply-ON state, and setting the power supply unit to the second power supply mode if the power-supply-state storage unit stores the power-supply-OFF state.

### BRIEF DESCRIPTION OF THE DRAWINGS

In the attached drawings:
FIG. 1 is a block diagram showing a configuration of an image forming apparatus according to the first embodiment of the present invention;
FIG. 2 is a flowchart showing a transition operation to an automatic-power-OFF mode of the image forming apparatus according to the first embodiment;
FIG. 3 is a flowchart showing an operation of the image forming apparatus according to the first embodiment when power supply from outside is shut off and then restarted;
FIG. 4 is a block diagram showing a configuration of an image forming apparatus according to the second embodiment of the present invention;
FIG. 5 is a flowchart showing a transition operation to the automatic-power-OFF mode of the image forming apparatus according to the second embodiment;
FIG. 6 is a flowchart showing a transition operation to the automatic-power-OFF mode of an image forming apparatus according to the third embodiment;
FIG. 7 is a flowchart showing a setting operation of an automatic-power-ON mode of an image forming apparatus according to the fourth embodiment; and
FIG. 8 is a flowchart showing a transition operation to the automatic-power-OFF mode of the image forming apparatus according to the fourth embodiment.

### DETAILED DESCRIPTION OF THE PREFERRED EMBODIMENT

Embodiments of the present invention will be described with reference to the attached drawings.

### FIRST EMBODIMENT.

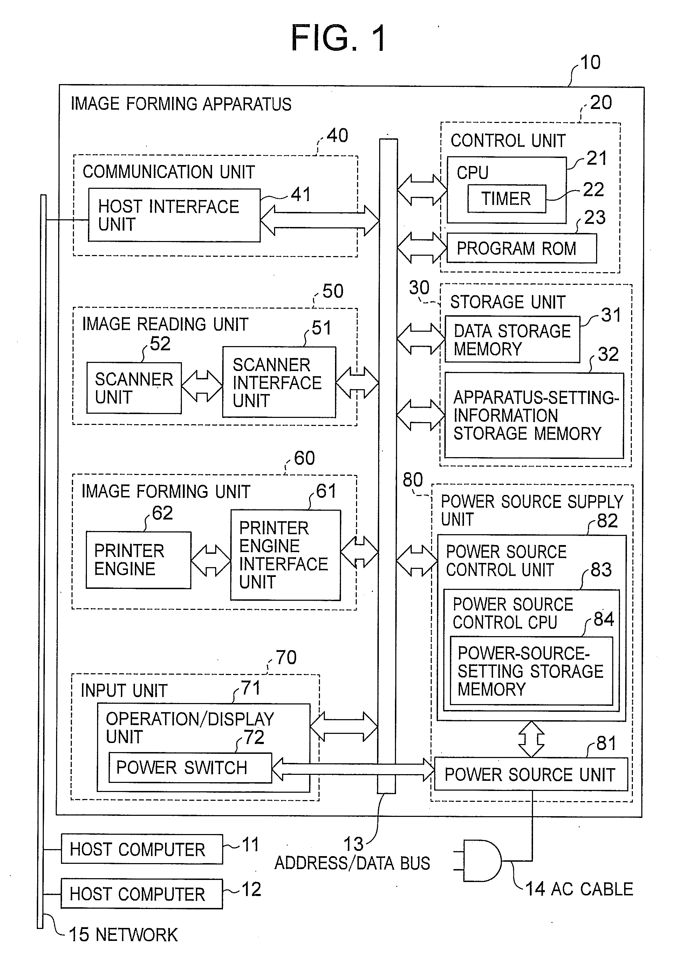

FIG. 1 is a block diagram showing a configuration of an image forming apparatus 10 according to the first embodiment of the present invention.

The image forming apparatus 10 shown in FIG. 1 may be a single function machine such as a printer, a facsimile machine or a copier, or may be a multi-function machine such as an MFP (Multi-Function Peripheral) having a plurality of functions of the single function machines. The image forming apparatus 10 may be of any type as long as the image forming apparatus 10 is able to form an image on a recording medium such as a printing sheet. The image forming apparatus 10 may use an inkjet method, an electrophotographic method, a thermal transfer method or the like to form an image on the recording medium. In this embodiment, the image forming apparatus 10 is configured as the MFP.

The image forming apparatus 10 is connected to host computers 11 and 12 as host devices (i.e., external devices) via a network 15 (i.e., a communication network) such as LAN (Local Area Network), intranet, internet or the like. The image forming apparatus 10 receives print data (i.e., image information) from the host computers 11 and 12, and prints an image according to the print data on the recording medium such as the printing sheet. The host computers 11 and 12 may be general personal computers including, for example, arithmetic units such as CPUs (Central Processing Units) or MPUs (Micro Processing Units), storage units such as magnetic disks or semiconductor memories, and communication interfaces. The host computers 11 and 12 may be of any type as long as the host computers 11 and 12 have a function to create print data (i.e., data to be printed by the image forming apparatus 10 on the recording medium) and a function to transmit the print data to the image forming apparatus 10.

The image forming apparatus 10 includes a control unit 20, a storage unit 30, a communication unit 40, an image reading unit 50, an image forming unit 60, an input unit 70 and a power source supply unit 80. The control unit 20, the storage unit 30, the communication unit 40, the image reading unit 50, the image forming unit 60, the input unit 70 and the power source supply unit 80 are connected via an address/data bus 13 (i.e., an internal communication line) so as to be able to communicate with each other.

The control unit 20 includes a CPU 21 (i.e., a control unit) and a program ROM 203 (i.e., a control processing memory). The CPU 21 includes a timer 22 as a time measurement unit (i.e., an automatic-power-OFF mode transition time measuring timer). The CPU 21 controls an entire operation of the image forming apparatus 10, and manages image information flow. Further, the CPU 21 is able to measure a lapse of a predetermined time using the timer 22. Control programs and data for the CPU 21 are stored in the program ROM 23.

The storage unit 30 includes a data storage memory 31 and an apparatus-setting-information storage memory 32. The data storage memory 31 stores print data such as image information transmitted from the host computers 11 and 12. The apparatus-setting-information storage memory 32 stores information regarding operations of respective units of the image forming apparatus 10. The CPU 21 accesses the storage unit 30 via the address/data bus 13, and performs reading and storing of necessary information. The apparatus-setting-information storage memory 32 stores various settings of the image forming apparatus 10 such as settings for transition to a plurality of power supply modes (for example, a power saving mode). The CPU 21 sends an instruction to the power source control unit 82 to transit to one of the respective power supply modes.

The communication unit 40 includes a host interface unit 41. The CPU 21 is connected to the host computers 11 and 12 via the host interface unit 41 so as to be able to communicate with the host computers 11 and 12. The host interface unit 41 is an interface that meets a standard such as Ethernet (Trademark), USB (Universal Serial Bus) 2.0 or the like. The host interface unit 41 receives information such as print data from the host computers 11 and 12 in accordance with the standard.

The image reading unit 50 includes a scanner interface unit 51 and a scanner unit 52. The scanner interface unit 51 is an interface circuit that transfers print data from the scanner unit 52 and performs transmission and reception of control signals according to an instruction from the CPU 21. The scanner unit 52 reads an image of a manuscript, and converts the image to print data.

The image forming unit 60 includes a printer engine interface unit 61 and a printer engine 62. The printer engine interface unit 61 is an interface circuit that transfers the print data to the printer engine 62 and performs transmission and reception of control signals according to an instruction from the CPU 21. The printer engine 62 performs printing on the recording medium such as the printing sheet based on the received print data.

The input unit 70 includes an operation/display unit 71. The operation/display unit 71 includes a power switch 72. The operation/display unit 71 is a man-machine interface. When the image forming apparatus 10 functions as a printer, a facsimile machine, a copier or the like, the operation/display unit 71 notifies the CPU 21 of content of operation (i.e., an operation instruction) of the printer, the facsimile machine, the copier or the like. The operation/display unit 71 is informed by the CPU 21 of a state of the image forming apparatus 10 as the printer, the facsimile machine, the copier or the like, and displays the informed state. A power source control unit 82 (described below) is informed of a state of the power switch 72.

The power source supply unit 80 includes a power source unit 81 (i.e., a power supply unit) and the power source control unit 82 (i.e., a power control unit). The power source unit 81 is supplied with AC current from an external power source (not shown) via an AC cable 14 (i.e., a power source cable). For example, a plug of the AC cable 14 is plugged into a receptacle in a home or office, so that the AC cable 14 is electrically connected to the external power source. In this way, the power source unit 81 is supplied with power from outside. The power source unit 81 converts the supplied AC current to DC current, and supplies the DC current to respective units of the image forming apparatus 10. The power source unit 81 has a first power supply mode and a second power supply mode. In the first power supply mode, the power source unit 81 supplies power to respective units of the image forming apparatus 10. In the second power supply mode, the power source unit 81 supplies power only to the power source control unit 82. Switching between the first power supply mode and the second power supply mode is performed by the power source control unit 82.

The term "respective units of the image forming apparatus 10" herein means, but are not limited to, the control unit 20, the storage unit 30, the communication unit 40, the image reading unit 50, the image forming unit 60, the input unit 70 and the power source supply unit 80 in the example shown in FIG. 1.

Further, the term "power" herein means electric power, i.e., electricity.

Furthermore, an expression that "the power source unit 81 supplies power only to the power source control unit 82" does not exclude a case where the power source unit 81 supplies power to the power source control unit 82 and also to any inessential unit of the image forming apparatus 10.

The power source control unit 82 includes a power source control CPU 83 as a power source control unit. The power source control CPU 83 includes a power-source-setting storage memory 84 as a power-supply-state storage unit. The power source control CPU 83 switches the power supply modes for reducing power consumption. The power-source-setting storage memory 84 stores power-supply-state information (i.e., information on whether a power-ON flag is 1 or 0). The power source unit 81 is controlled based on the power-supply-state information (also referred to as power source control information).

An operation of the image forming apparatus 10 will be described. First, description will be made to a transition operation to the automatic-power-OFF mode of the image forming apparatus 10 in a state where the image forming apparatus 10 is supplied with power from outside.

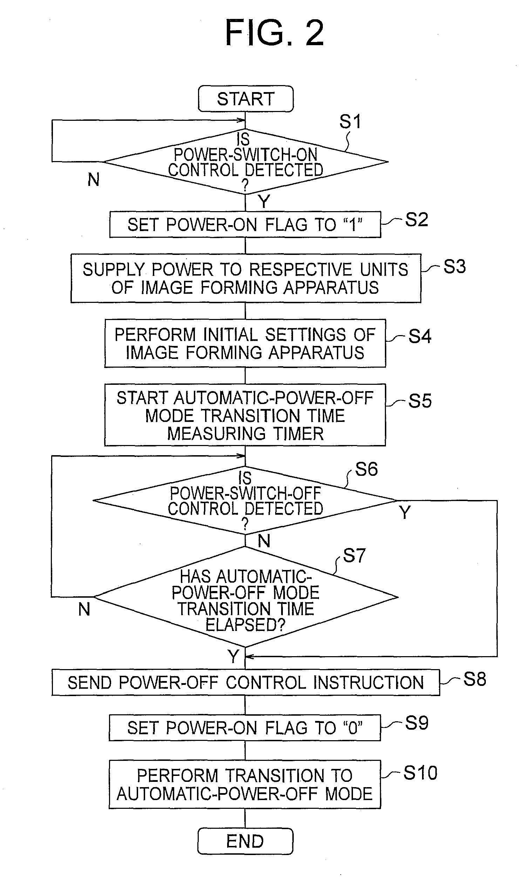

FIG. 2 is a flowchart showing the transition operation to the automatic-power-OFF mode of the image forming apparatus 10.

In a state where the power source unit 81 is in the second power supply mode (that is, where the power source unit 81 is supplied with the power from outside, and supplies the power only to the power source control unit 82), the power source control CPU 83 monitors the state of the power switch 72, and determines whether a power-switch-ON control is detected. The term "power-switch-ON control" means, but is not limited to, a control signal outputted from the operation/display unit 71 when the power switch 72 is operated to turn ON.

When the operator presses the power switch 72, the power source control CPU 83 detects the power-switch-ON control, and sets the power-ON flag (stored in the power-source-setting storage memory 84) to "1". The power-ON flag is a flag indicating the power-supply-state (i.e., a power-supply-ON state or a power-supply-OFF state). When the power-ON flag is set to 1, it indicates that the image forming apparatus 10 is turned ON (i.e., the power-supply-ON state). When the power-ON flag is set to 0, it indicates that the image forming apparatus 10 is turned OFF (i.e., the power-supply-OFF state). The power source control CPU 83 repeatedly determines whether the power source control CPU 83 detects the power-switch-ON control, until the power source control CPU 83 detects the power-switch-ON control.

Next, the power source control CPU 83 performs control to supply power to the respective units of the image forming apparatus 10. More specifically, the power source control CPU 83 causes the power source unit 81 to supply power to the respective units of the image forming apparatus 10.

Next, the CPU 21 performs initial settings of the image forming apparatus 10. More specifically, the CPU 21 performs initial settings of peripheral LSIs (Large Scale Integrators) and initialization of respective memories in the image forming apparatus 10. The CPU 21 performs print preparation control via the printer engine interface unit 61. Next, the CPU 21 enables communication with the host computers 11 and 12 via the host interface unit 41, so that the image forming apparatus 10 is placed in a standby state. This state is the first power supply mode.

Next, the CPU 21 causes the timer 22 (i.e., the automatic-power-OFF mode transition time measuring timer) to start counting (i.e., measuring) an automatic-power-OFF mode transition time. More specifically, the CPU 21 sets the timer 22 for the automatic-power-OFF mode transition time, and starts the timer 22. The automatic-power-OFF mode transition time is a predetermined time after the power switch 72 is turned ON and before the image forming apparatus 10 starts transition to the automatic-power-OFF mode, during which time the operation/ display unit 71 is not operated by the operator and the image forming apparatus 10 does not run. The automatic-power-OFF mode transition time is stored in the apparatus-setting-information storage memory 32.

Next, the power source control CPU 83 monitors the state of the power switch 72, and determines whether a power-switch-OFF control is detected or nor. The term "power-switch-OFF control" means, but is not limited to, a control signal outputted from the operation/display unit 71 when the power switch 72 is operated to turn OFF.

If the operator does not operate the power switch 72 to turn OFF, the power source control CPU 83 does not detect the power-switch-OFF control. In this case, the CPU 21 monitors the automatic-power-OFF mode transition time measuring timer (i.e., the timer 22), and determines whether the automatic-power-OFF mode transition time has elapsed.

If the automatic-power-OFF mode transition time has not yet elapsed, the power source control CPU 83 waits for the automatic-power-OFF mode transition time to elapse. That is, the power source control CPU 83 repeatedly determines whether the power-switch-OFF control is detected, and determines whether the automatic-power-OFF mode transition time has elapsed.

If the automatic-power-OFF mode transition time (measured by the automatic-power-OFF mode transition time measuring timer) has elapsed, the CPU 21 performs a power-OFF preparation control of the respective units of the image forming apparatus 10 for turning OFF the image forming apparatus 10. Next, the CPU 21 sends a power-OFF control instruction to the power source control CPU 83.

In this regard, if the operator operates the power switch 72 to turn OFF, the power source control CPU 83 detects the power-switch-OFF control, and notifies the CPU 21 of detection of the power-switch-OFF control. On receiving the notification from the power source control CPU 83, the CPU 21 performs the power-OFF preparation control of the respective units of the image forming apparatus 10, and then sends the power-OFF control instruction to the power source control CPU 83.

Upon receiving the power-OFF control instruction from the CPU 21, the power source control CPU 83 sets the power-ON flag (stored in the power-source-setting storage memory 84) to "0".

Next, the power source control CPU 83 performs the transition to the automatic-power-OFF mode. To be more specific, the power source control CPU 83 causes the power source unit 81 to stop supplying power to the respective units of the image forming apparatus 10. The power source unit 81 stops supplying power to the respective units of the image forming apparatus 10 except for the power source control unit 82. Therefore, the switching from the first power supply mode to the second power supply mode is completed.

Next, the transition operation to the automatic-power-OFF mode of the image forming apparatus 10 will be described with reference to the flowchart shown in FIG. 2.

In step S1, the power source control CPU 83 determines whether the power-switch-ON control is detected. If the power-switch-ON control is detected, the process proceeds to step S2. If the power-switch-ON control is not detected, processing of step S1 is repeated.

In step S2, the power source control CPU 83 sets the power-ON flag to "1".

In step S3, the power source control CPU 83 performs control to supply the power to the respective units of the image forming apparatus 10.

In step S4, the CPU 21 performs initial settings of the image forming apparatus 10.

In step S5, the CPU 21 causes the automatic-power-OFF mode transition time measuring timer to start counting.

In step S6, the power source control CPU 83 determines whether the power-switch-OFF control is detected. If the power-switch-OFF control is detected, the process proceeds to step S8. If the power-switch-OFF control is not detected, the process proceeds to step S7.

In step S7, the CPU 21 checks the automatic-power-OFF mode transition time measuring timer, and determines whether the automatic-power-OFF mode transition time has elapsed. If the automatic-power-OFF mode transition time has elapsed, the process proceeds to step S8. If the automatic-power-OFF mode transition time has not yet elapsed, the process returns to step S6.

In step S8, the CPU 21 sends the power-OFF control instruction to the power source control CPU 83.

In step S9, the power source control CPU 83 sets the power-ON flag to "0".

In step S10, the power source control CPU 83 performs the transition to the automatic-power-OFF mode.

Next, description will be made to an operation of the image forming apparatus 10 when the power supply from outside is shut off and is then restarted. In this regard, the power supply from outside is shut off for reasons such as power outage, or disconnection of the plug of the end of the AC cable 14 from the receptacle. The power supply is restarted for reasons such as restoration of power, or reconnection of the plug of the AC cable 14 to the receptacle.

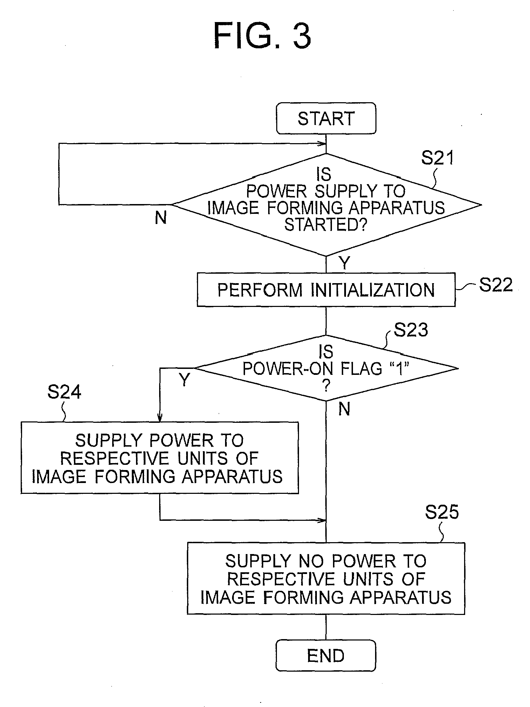

FIG. 3 is a flowchart showing the operation of the image forming apparatus 10 when the power supply from outside is restarted after being shut off.

If the power supply (i.e., AC power supply) to the image forming apparatus 10 is restarted, the power source unit 81 supplies the power only to the power source control unit 82. That is, the power source unit 81 is in the second power supply mode. The power source control CPU 83 of the power source control unit 82 is activated, and performs initialization. In contrast, if the power supply to the image forming apparatus 10 is not yet restarted, the power source control unit 82 is not supplied with power. Therefore, the power source control CPU 83 of the power source control unit 82 is not activated, and performs no processing.

After the power source control CPU 83 completes the initialization, the power source control CPU 83 checks the power-ON flag stored in the power-source-setting storage memory 84, and determines whether the power-ON flag is "1".

If the power-ON flag is "1", the power source control CPU 83 performs control to supply power to the respective units of the image forming apparatus 10. To be more specific, the power source control CPU 83 causes the power source unit 81 to supply power to the respective units of the image forming apparatus 10. That is, the power source control CPU 83 switches the power supply mode from the second power supply mode to the first power supply mode. The image forming apparatus 10 is brought to the power-supply-ON state, i.e., the state where the image forming apparatus 10 is supplied with power (in other words, a state where the image forming apparatus 10 is turned ON).

If the power-ON flag is not "1" (i.e., if the power-ON flag is "0"), the power source control CPU 83 performs control to supply no power to the respective units of the image forming apparatus 10. To be more specific, the power source control CPU 83 causes the power source unit 81 not to supply power to the respective units of the image forming apparatus 10. That is, the power source control CPU 83 maintains the second power supply mode. The image forming apparatus 10 is maintained in the power-supply-OFF state, i.e., the state where the image forming apparatus 10 is not supplied with power (in other words, a state where the image forming apparatus 10 is turned OFF).

Next, the operation of the image forming apparatus 10 after the AC power supply is restarted will be described with reference to the flowchart shown in FIG. 3.

In step S21, if the power supply (i.e., the AC power supply) to the image forming apparatus 10 is started, the power source control unit 82 is supplied with power by the power source unit 81, and the power source control CPU 83 is activated. In this case, the process proceeds to step S22. If the power supply to the image forming apparatus 10 is not yet started, the power source control CPU 83 is not activated, and performs no processing.

In step S22, the power source control CPU 83 performs initialization.

In step S23, the power source control CPU 83 determines whether the power-ON flag is "1". If the power-ON flag is "1", the process proceeds to step S24. If the power-ON flag is not "1", the process proceeds to step S25.

In step S24, the power source control CPU 83 performs control to supply power to the respective units of the image forming apparatus 10.

In step S25, the power source control CPU 83 performs control to supply no power to the respective units of the image forming apparatus 10. In other words, the power source unit 81 does not supply power to the respective units of the image forming apparatus 10.

In this regard, the processes of the flowcharts shown in FIGS. 2 and 3 constitute an example of the power supply control method of the image forming apparatus 10 of the first embodiment.

As described above, according to the first embodiment of the present invention, in the case where the image forming apparatus 10 is turned OFF (i.e., normally turned OFF) by operation of the power switch 72 by the operator, the image forming apparatus 10 is not turned ON even when the power supply from outside is restarted after being shut off (for reasons such as power outage or disconnection of the plug of the AC cable 14 from the receptacle). However, in the case where the image forming apparatus 10 is turned ON (i.e., normally turned ON) by operation of the power switch 72 by the operator and is being used, the image forming apparatus 10 is turned ON (i.e., returns to the power-supply-ON state) when the power supply from outside is restarted after being shut off (for reasons such as power outage or disconnection of the plug of the AC cable 14 from the receptacle). That is, the operator need not turn ON the image forming apparatus 10. Therefore, the operator is saved from trouble, and usability of the image forming apparatus 10 is enhanced.

### SECOND EMBODIMENT.

Next, the second embodiment of the present invention will be described. Components that are the same as those of the first embodiment are assigned with the same reference numerals, and duplicate explanations will be omitted. Explanations of operations and advantages that are the same as those of the first embodiment will also be omitted.

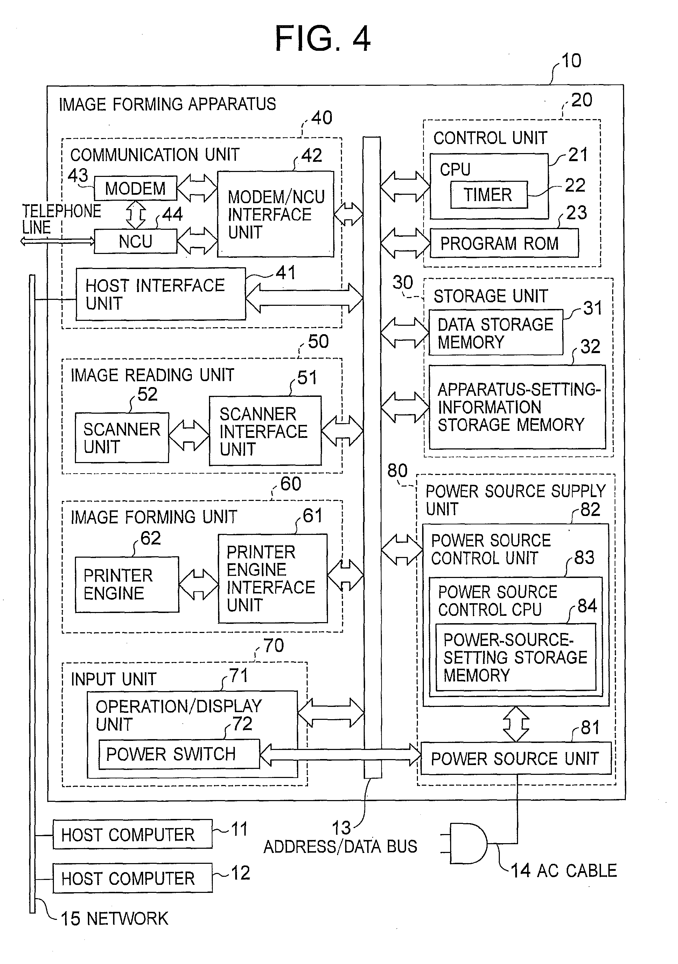

FIG. 4 is a block diagram showing a configuration of an image forming apparatus 10 according to the second embodiment of the present invention.

The image forming apparatus 10 of the second embodiment includes the communication unit 40. The communication unit 40 includes the host interface unit 41, a modem/NCU interface unit 42, a modem 43, and an NCU (Network control Unit) 44. The NCU 44 is connected to a telephone line as a communication network.

The modem 43 is a modem based on ITU-T (The International Telecommunication Union - Telecommunications Standardization Sector) Recommendation V. 34, V. 17, V. 29, V. 27ter, V. 8 and V. 23. The modem 43 receives a facsimile transmission signal and a sender information signal from the telephone line via the NCU 44, demodulates the received signal, and outputs the demodulated signal to the address/data bus 13. The modem 43 modulates and converts facsimile transmission data provided via the address/data bus 13 into a facsimile transmission signal, and outputs the facsimile transmission signal to the telephone line via the NCU 44.

The NCU 44 is an interface for connection with the telephone line. The CPU 21 performs telephone line control via the modem/NCU interface 42 and the address/data bus 13. The telephone line control includes, for example, detection of a connection state of the telephone line, detection of reception, and input/output of signals to and from the telephone line.

Other features of the second embodiment are the same as those of the first embodiment, and duplicate explanations are omitted.

Next, an operation of the image forming apparatus 10 of the second embodiment will be described. Here, a transition operation to the automatic-power-OFF mode in a state where the image forming apparatus 10 is supplied with power from outside will be described.

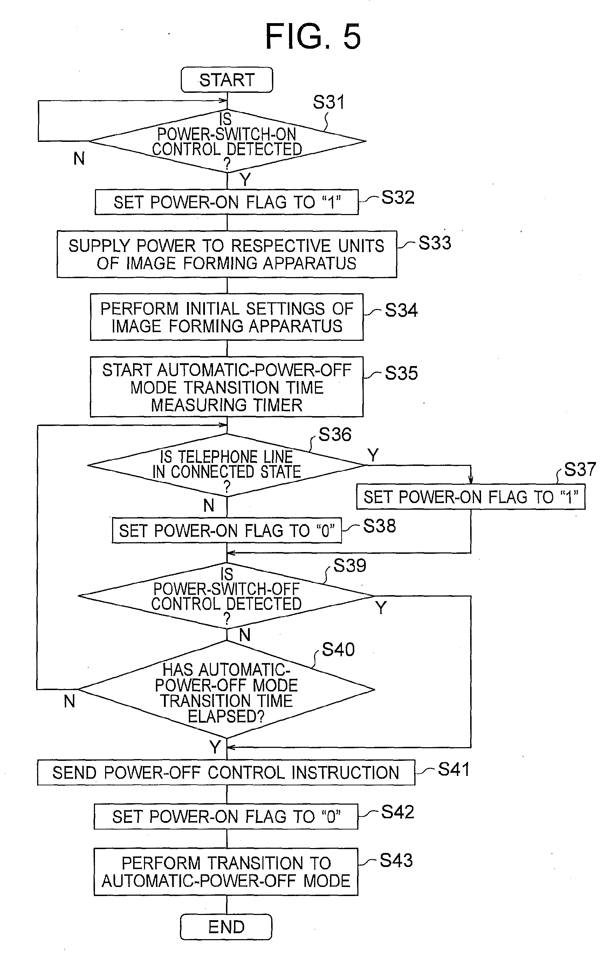

FIG. 5 is a flowchart showing the transition operation to the automatic-power-OFF mode of the image forming apparatus 10.

Steps S31 through S35 shown in FIG. 5, i.e., processing from determination of whether the power-switch-ON control is detected to starting of the automatic-power-OFF mode transition time measuring timer are the same as the processing of steps S1 through S5 (FIG. 2) described in the first embodiment, and duplicate explanations are omitted.

After the CPU 21 causes the automatic-power-OFF mode transition time measuring timer to start counting, and the CPU 21 determines whether the telephone line is in a connected state. To be more specific, the CPU 21 detects a voltage applied to the telephone line (applied by a switchboard) using the NCU 44 and the modem/NCU interface 42, and determines whether the telephone line is in the connected state based on the detected voltage.

If the CPU 21 detects a voltage applied to the telephone line, the CPU 21 determines that the telephone line is in the connected state, and sends an instruction to the power source control CPU 83 to set the power-ON flag to "1". In response to the instruction from the CPU 21, the power source control CPU 83 sets the power-ON flag (stored in the power-source-setting storage memory 84) to "1". If the CPU 21 does not detect a voltage applied to the telephone line, the CPU 21 determines that the telephone line is not in the connected state, and sends an instruction to the power source control CPU 83 to set the power-ON flag to "0". In response to the instruction from the CPU 21, the power source control CPU 83 sets the power-ON flag (stored in the power-source-setting storage memory 84) to "0".

Next, the power source control CPU 83 monitors the state of the power switch 72, and determines whether the power-switch-OFF control is detected.

Steps S39 through S43 shown in FIG. 5, i.e., processing from the determination of whether the power-switch-OFF control is detected to the transition to the automatic-power-OFF mode are the same as the processing of steps S6 through S10 (FIG. 2) described in the first embodiment, and duplicate explanations are omitted. Unlike in the first embodiment, if the automatic-power-OFF mode transition time has not yet elapsed in step S40, the process returns to step S36 in the second embodiment.

Next, the transition operation to the automatic-power-OFF mode of the image forming apparatus 10 will be described with reference to the flowchart of FIG. 5.

In step S31, the power source control CPU 83 determines whether the power-switch-ON control is detected. If the power-switch-ON control is detected, the process proceeds to step S32. If the power-switch-ON control is not detected, processing of step S31 is repeated.

In step S32, the power source control CPU 83 sets the power-ON flag to "1".

In step S33, the power source control CPU 83 performs control to supply power to the respective units of the image forming apparatus 10.

In step S34, the CPU 21 performs initial settings of the image forming apparatus 10.

In step S35, the CPU 21 causes the automatic-power-OFF mode transition time measuring timer to start counting.

In step S36, the CPU 21 determines whether the telephone line is in the connected state. If the telephone line is in the connected state, the process proceeds to step S37. If the telephone line is not in the connected state, the process proceeds to step S38.

In step S37, the power source control CPU 83 sets the power-ON flag to "1".

In step S38, the power source control CPU 83 sets the power-ON flag to "0".

In step S39, the power source control CPU 83 determines whether the power-switch-OFF control is detected. If the power-switch-OFF control is detected, the process proceeds to step S41. If the power-switch-OFF control is not detected, the process proceeds to step S40.

In step S40, the CPU 21 checks the automatic-power-OFF mode transition time measuring timer, and determines whether the automatic-power-OFF mode transition time has elapsed. If the automatic-power-OFF mode transition time has elapsed, the process proceeds to step S41. If the automatic-power-OFF mode transition time has not yet elapsed, the process returns to step S36.

In step S41, the CPU 21 sends the power-OFF control instruction to the power source control CPU 83.

In step S42, the power source control CPU 83 sets the power-ON flag to "0".

In step S43, the power source control CPU 83 performs control to transit to the automatic-power-OFF mode.

In this regard, the operation when the power supply from outside is shut off (for reasons such as power outage or disconnection of the plug of the AC cable 14 from the receptacle) and then restarted (for reasons such as restoration of power or reconnection of the plug of the AC cable 14 to the receptacle) is the same as the operation (FIG. 3) described in the first embodiment, and duplicate explanations are omitted.

As described above, according to the second embodiment of the present invention, in the case where the image forming apparatus 10 is connected to the telephone line and is being used (for example, used as a facsimile machine) when the power supply from outside is restarted after being shut off (for reasons such as power outage or disconnection of the plug of the AC cable 14 from the receptacle), the image forming apparatus 10 automatically returns to the power-supply-ON state even if an operator does not exists near the image forming apparatus 10. That is, the operator need not turn ON the image forming apparatus 10. Therefore, the operator is saved from trouble, and usability of the image forming apparatus 10 is enhanced.

### THIRD EMBODIMENT.

The third embodiment of the present invention will be described. Components that are the same as those of the first or second embodiment are assigned with the same reference numerals, and duplicate explanations will be omitted. Explanations of operations and advantages that are the same as those of the first or second embodiment will also be omitted.

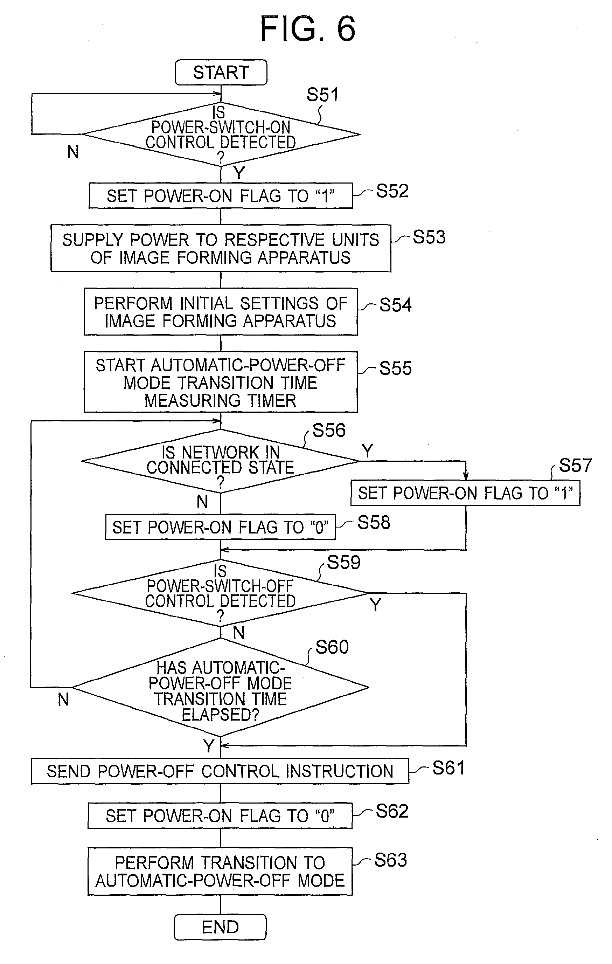

FIG. 6 is a flowchart showing a transition operation to the automatic-power-OFF mode of the image forming apparatus 10 of the third embodiment.

A configuration of the image forming apparatus 10 of the third embodiment is the same as that of the image forming apparatus 10 (FIG. 1) of the first embodiment, and duplicate explanation will be omitted.

An operation of the image forming apparatus 10 of the third embodiment will be described. First, a transition operation to the automatic-power-OFF mode in a state where the image forming apparatus 10 is supplied with power from outside will be described.

FIG. 6 is a flowchart showing the transition operation to the automatic-power-OFF mode of the image forming apparatus 10.

Steps S51 through S55 shown in FIG. 6, i.e., processing from determination of whether the power-switch-ON control is detected to starting of the automatic-power-OFF mode transition time measuring timer are the same as the processing of steps S1 through S5 (FIG. 2) described in the first embodiment, and duplicate explanations are omitted.

After the CPU 21 causes the automatic-power-OFF mode transition time measuring timer to start counting, and the CPU 21 determines whether the network 15 is in a connected state. To be more specific, the CPU 21 detects a connection state between the host interface unit 41 and the network 15 to determine whether the network 15 is in the connected state.

If the network 15 is in the connected state, the CPU 21 sends an instruction to the power source control CPU 83 to set the power-ON flag to "1". In response to the instruction from the CPU 21, the power source control CPU 83 sets the power-ON flag (stored in the power-source-setting storage memory 84) to "1". If the network 15 is not in the connected state, the CPU 21 sends an instruction to the power source control CPU 83 to set the power-ON flag to "0". In response to the instruction from the CPU 21, the power source control CPU 83 sets the power-ON flag (stored in the power-source-setting storage memory 84) to "0".

Next, the power source control CPU 83 monitors the power switch 72, and determines whether the power-switch-OFF control is detected.

Steps S59 through S63 shown in FIG. 6, i.e., processing from the determination of whether the power-switch-OFF control is detected to the transition to the automatic-power-OFF mode are the same as the processing of steps S6 through S10 (FIG. 2) described in the first embodiment, and duplicate explanations are omitted. Unlike in the first embodiment, if the automatic-power-OFF mode transition time has not yet elapsed in step S60, the process returns to step S56 in the third embodiment.

Next, the transition operation to the automatic-power-OFF mode of the image forming apparatus 10 will be described with reference to the flowchart of FIG. 6.

In step S51, the power source control CPU 83 determines whether the power-switch-ON control is detected. If the power-switch-ON control is detected, the process proceeds to step S52. If the power-switch-ON control is not detected, processing of step S51 is repeated.

In step S52, the power source control CPU 83 sets the power-ON flag to "1".

In step S53, the power source control CPU 83 performs control to supply power to the respective units of the image forming apparatus 10.

In step S54, the CPU 21 performs initial settings of the image forming apparatus 10.

In step S55, the CPU 21 causes the automatic-power-OFF mode transition time measuring timer to start counting.

In step S56, the CPU 21 determines whether the network 15 is in the connected state. If the network 15 is in the connected state, the process proceeds to step S57. If the network 15 is not in the connected state, the process proceeds to step S58.

In step S57, the power source control CPU 83 sets the power-ON flag to "1".

In step S58, the power source control CPU 83 sets the power-ON flag to "0".

In step S59, the power source control CPU 83 determines whether the power-switch-OFF control is detected. If the power-switch-OFF control is detected, the process proceeds to step S61. If the power-switch-OFF control is not detected, the process proceeds to step S60.

In step S60, the CPU 21 checks the automatic-power-OFF mode transition time measuring timer, and determines whether the automatic-power-OFF mode transition time has elapsed. If the automatic-power-OFF mode transition time has elapsed, the process proceeds to step S61. If the automatic-power-OFF mode transition time has not yet elapsed, the process returns to step S56.

In step S61, the CPU 21 sends the power-OFF control instruction to the power source control CPU 83.

In step S62, the power source control CPU 83 sets the power-ON flag to "0".

In step S63, the power source control CPU 83 performs control to transit to the automatic-power-OFF mode.

In this regard, the operation when the power supply from outside is shut off (for reasons such as power outage or disconnection of the plug of the AC cable 14 from the receptacle) and then restarted (for reasons such as restoration of power or reconnection of the plug of the AC cable 14 to the receptacle) is the same as the operation (FIG. 3) described in the first embodiment, and duplicate explanations are omitted.

As described above, according to the third embodiment of the present invention, in the case where the image forming apparatus 10 is connected to the network 15 and is being used (for example, used as a facsimile machine) when the power supply from outside is restarted after being shut off (for reasons such as power outage or disconnection of the plug of the AC cable 14 from the receptacle), the image forming apparatus 10 automatically returns to the power-supply-ON state even if an operator does not exist near the image forming apparatus 10. That is, the operator need not turn ON the image forming apparatus 10. Therefore, the operator is saved from trouble, and usability of the image forming apparatus 10 is enhanced.

### FOURTH EMBODIMENT.

The fourth embodiment of the present invention will be described. Components that are the same as those of the first, second or third embodiment are assigned with the same reference numerals, and duplicate explanations will be omitted. Explanations of operations and advantages that are the same as those of the first, second or third embodiment will also be omitted.

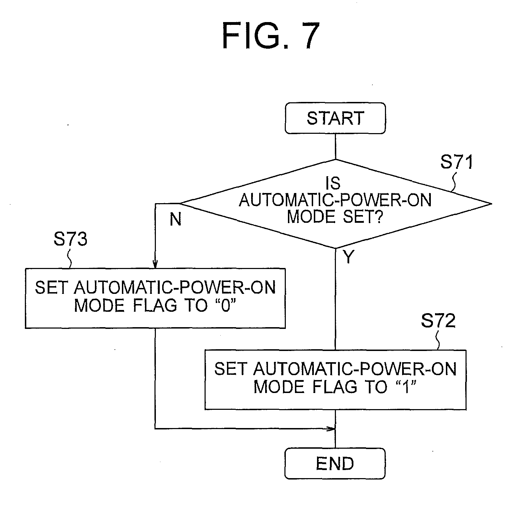

FIG. 7 is a flowchart showing a setting operation of an automatic-power-ON mode of the image forming apparatus 10 of the fourth embodiment.

A configuration of the image forming apparatus 10 of the fourth embodiment is the same as that of the image forming apparatus 10 of the first embodiment except for that the apparatus-setting-information storage memory 32 of the fourth embodiment stores information on an automatic-power-ON mode (i.e., information on whether an automatic-power-ON mode flag is 1 or 0). The automatic-power-ON mode may also be referred to as an automatic-ON mode. The automatic-power-ON mode is set by operation of setting switches of the operation/display unit 71 by an operator. The CPU 21 acquires information on whether the automatic-power-ON mode is set or not via the operation/display unit 71 and the address/data bus 13. The CPU 21 stores the acquired information (as the automatic-power-ON mode flag) in the apparatus-setting-information storage memory 32 via the address/data bus 13. Other features of the image forming apparatus 10 of the fourth embodiment are the same as those of the image forming apparatus 10 of the first embodiment.

An operation of the image forming apparatus 10 of the third embodiment will be described. First, a setting operation of the automatic-power-ON mode will be described.

When the operator operates the operation/display unit 71 to set the automatic-power-ON mode, the CPU 21 recognizes the setting content of the automatic-power-ON mode via the operation/display unit 71, and determines whether the automatic-power-ON mode is set.

If the CPU 21 recognizes that the automatic-power-ON mode is set, the CPU 21 sets the automatic-power-ON mode flag (stored in the apparatus-setting-information storage memory 32) to "1".

If the CPU 21 recognizes that the automatic-power-ON mode is not set, the CPU 21 sets the automatic-power-ON mode flag (stored in the apparatus-setting-information storage memory 32) to "0".

Next, the setting operation of the automatic-power-ON mode according to the fourth embodiment will be described with reference to FIG. 7.

In step S71, the CPU 21 determines whether the automatic-power-ON mode is set. If the automatic-power-ON mode is set, the process proceeds to step S72. If the automatic-power-ON mode is not set, the process proceeds to step S73.

In step S72, the CPU 21 sets the automatic-power-ON mode flag to "1".

In step S73, the CPU 21 sets the automatic-power-ON mode flag to "0".

Next, a transition operation to the automatic-power-OFF mode in a state where the image forming apparatus 10 is supplied with power from outside will be described.

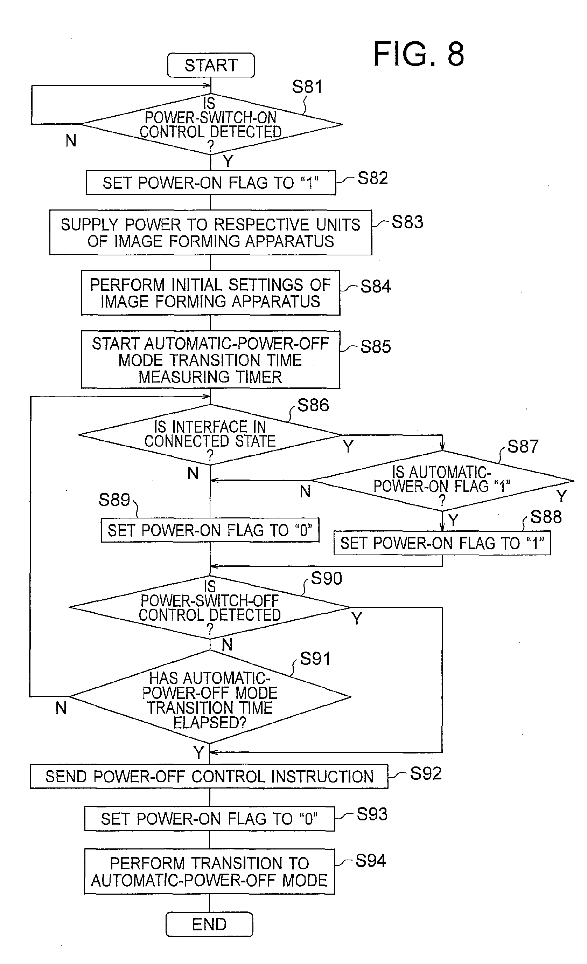

FIG. 8 is a flowchart showing the transition operation to the automatic-power-OFF mode of the image forming apparatus 10 according to the fourth embodiment.

Steps S81 through S85 shown in FIG. 8, i.e., processing from determination of whether the power-switch-ON control is detected to starting of the automatic-power-OFF mode transition time measuring timer are the same as the processing of steps S1 through S5 (FIG. 2) described in the first embodiment, and duplicate explanations are omitted.

After the CPU 21 causes the automatic-power-OFF mode transition time measuring timer to start counting, the CPU 21 determines whether the interface is in the connected state. To be more specific, the CPU 21 detects the connection state between the host interface unit 41 and the network 15 to detect whether the interface is in the connected state.

If the network 15 is in the connected state, the CPU 21 determines that the interface is in the connected state, and checks the automatic-power-ON mode flag (stored in the apparatus information storage memory 32) to check whether the automatic-power-ON mode flag is "1".

If the automatic-power-ON mode flag is "1", the CPU 21 sends an instruction to the power source control CPU 83 to set the power-ON flag (stored in the power-source-setting storage memory 84) to "1". If the automatic-power-ON mode flag is "0", the CPU 21 sends an instruction to the power source control CPU 83 to set the power-ON flag (stored in the power-source-setting storage memory 84) to "0". Further, if the CPU 21 determines that the interface is not in the connected state, the CPU 21 sends an instruction to the power source control CPU 83 to set the power-ON flag (stored in the power-source-setting storage memory 84) to "0".

Then the power source control unit 83 monitors the power switch 72, and determines whether the power-switch-OFF control is detected.

Steps S90 through S94 shown in FIG. 8, i.e., processing from the determination of whether the power-switch-OFF control is detected to the transition to the automatic-power-OFF mode are the same as the processing of steps S6 through S10 (FIG. 2) described in the first embodiment, and duplicate explanations are omitted. Unlike in the first embodiment, if the automatic-power-OFF mode transition time has not yet elapsed in step S91, the process returns to step S86 in the fourth embodiment.

Next, the transition operation to the automatic-power-OFF mode will be described with reference to FIG. 8.

In step S81, the power source control CPU 83 determines whether the power-switch-ON control is detected. If the power-switch-ON control is detected, the process proceeds to step S82. If the power-switch-ON control is not detected, processing of step S81 is repeated.

In step S82, the power source control CPU 83 sets the power-ON flag to "1".

In step S83, the power source control CPU 83 performs control to supply power to the respective units of the image forming apparatus 10.

In step S84, the CPU 21 performs initial settings of the image forming apparatus 10.

In step S85, the CPU 21 causes the automatic-power-OFF transition time measuring timer to start counting.

In step S86, the CPU 21 determines whether the interface is in the connected state. If the interface is in the connected state, the process proceeds to step S87. If the interface is not in the connected state, the process proceeds to step S89.

In step S87, the CPU 21 determines whether the automatic-power-ON mode flag is "1". If the automatic-power-ON mode flag is "1", the process proceeds to step S88. If the automatic-power-ON mode flag is not "1", the process proceeds to step S89.

In step S88, the CPU 21 causes the power source control CPU 83 to set the power-ON flag to "1".

In step S89, the CPU 21 causes the power source control CPU 83 to set the power-ON flag to "0".

In step S90, the power source control CPU 83 determines whether the power-switch-OFF control is detected. If the power-switch-OFF control is detected, the process proceeds to step S92. If the power-switch-OFF control is not detected, the process proceeds to step S91.

In step S91, the CPU 21 checks the automatic-power-OFF mode transition time measuring timer, and determines whether the automatic-power-OFF mode transition time has elapsed. If the automatic-power-OFF mode transition time has elapsed, the process proceeds to step S92. If the automatic-power-OFF mode transition time has not yet elapsed, the process returns to step S86.

In step S92, the CPU 21 sends the power-OFF control instruction to the power source control CPU 83.

In step S93, the power source control CPU 83 sets the power-ON flag to "0".

In step S94, the power source control unit 83 performs control to transit to the automatic-power-OFF mode.

In this regard, the operation when the power supply from outside is shut off (for reasons such as power outage or disconnection of the plug of the AC cable 14 from the receptacle) and then restarted (for reasons such as restoration of power or reconnection of the plug of the AC cable 14 to the receptacle) is the same as the operation (FIG. 3) described in the first embodiment, and duplicate explanations are omitted.

As described above, according to the fourth embodiment of the present invention, the operator can arbitrarily set whether the image forming apparatus 10 automatically returns to the power-supply-ON state or not when the power supply from outside is restarted after being shut off (for reasons such as power outage or disconnection of the plug of the AC cable 14 from the receptacle). Therefore, usability of the image forming apparatus 10 is further enhanced.

The four embodiment may be combined with the second or third embodiment.

In the first through fourth embodiments, the image forming apparatus 10 has been configured as the MFP. However, the image forming apparatus may be any apparatus (for example, a printer, a facsimile machine, or a copier) having a function to form an image.

While the preferred embodiments of the present invention have been illustrated in detail, it should be apparent that modifications and improvements may be made to the invention without departing from the spirit and scope of the invention as described in the following claims.

## Claims

1. An image forming apparatus (10) connectable and/or connected to a communication network (15), the image forming apparatus (10) comprising:
a power supply unit (81) suppliable and/or supplied with power from outside and supplies the power to respective units of the image forming apparatus (10); and
a power control unit (82) that controls the power supply unit (81), the power control unit (82) including a power-supply-state storage unit (84) that stores a power-supply-ON state or a power-supply-OFF state,
wherein the power supply unit (81) is switchable between a first power supply mode in which the power supply unit (81) supplies the power to all of the respective units of the image forming apparatus (10) and a second power supply mode in which the power supply unit (81) supplies the power to the power control unit (82), and
wherein when the power supplied from outside is restarted after being shut off, the power control unit (82) sets the power supply unit (81) to the first power supply mode if the power-supply-state storage unit (84) stores the power-supply-ON state, and sets the power supply unit (81) to the second power supply mode if the power-supply-state storage unit (84) stores the power-supply-OFF state.

2. The image forming apparatus (10) according to claim 1, further comprising:
a power switch (72) to be operated by an operator; and
a control unit (21) including a timer (22) for measuring a predetermined time,
wherein the power-supply-state storage unit (84) stores the power-supply-ON state if the power switch (72) is ON, and stores the power-supply-OFF state if the power switch (72) is OFF,
wherein if the predetermined time elapses while the power-supply-state storage unit (84) stores the power-supply-ON state, the control unit (21) switches the power supply unit (81) from the first power supply mode to the second power supply mode.

3. The image forming apparatus (10) according to claim 2, wherein if the power-supply-state storage unit (84) stores the power-supply-ON state, the power supply unit (81) is in the first power supply mode, and
wherein if the power-supply-state storage unit (84) stores the power-supply-OFF state, the power supply unit (81) is in the second power supply mode.

4. The image forming apparatus (10) according to claim 2 or 3, wherein if the control unit (21) determines that the communication network (15) is in a connected state, the control unit (21) causes the power-supply-state storage unit (84) to store the power-supply-ON state, and
wherein if the control unit (21) determines that the communication network (15) is not in the connected state, the control unit (21) causes the power-supply-state storage unit (84) to store the power-supply-OFF state.

5. The image forming apparatus (10) according to claim 4, wherein the communication network (15) includes a telephone line (11),
wherein if the control unit (21) determines that the telephone line (11) is in a connected state, the control unit (21) causes the power-supply-state storage unit (84) to store the power-supply-ON state, and
wherein if the control unit (21) determines that the telephone line (11) is not in the connected state, the control unit (21) causes the power-supply-state storage unit (84) to store the power-supply-OFF state.

6. The image forming apparatus (10) according to claim 2 or 3, further comprising a setting switch (71) for setting an automatic-power-ON mode,
wherein if the control unit (21) determines that the automatic-power-ON mode is set, the control unit (21) causes the power-supply-state storage unit (84) to store the power-supply-ON state, and
wherein if the control unit (21) determines that the automatic-power-ON mode is not set, the control unit (21) causes the power-supply-state storage unit (84) to store the power-supply-OFF state.

7. The image forming apparatus (10) according to any one of claims 2 to 6, wherein when the power switch (72) is turned on, the power control unit (82) sets the power supply unit (81) to the first power supply mode, and causes the control unit (21) to start the timer (22).

8. The image forming apparatus (10) according to claim 7, wherein when the power supply unit (81) is set to the first power supply mode, the control unit (21) performs initial settings of the image forming apparatus (10).

9. A power supply control method of an image forming apparatus (10) connected to a communication network (15),
the image forming apparatus (10) comprising:
a power supply unit (81) supplied with power from outside and supplies the power to respective units of the image forming apparatus (10); and
a power control unit (82) that controls the power supply unit (81),
wherein the power supply unit (81) is switchable between a first power supply mode in which the power supply unit (81) supplies the power to all of the respective units of the image forming apparatus (10) and a second power supply mode in which the power supply unit (81) supplies the power to the power control unit (82), and
the method comprising:
storing a power-supply-ON state or a power-supply-OFF state in a power-supply-state storage unit (84) provided in the power control unit (82);
determining whether the power-supply-state storage unit (84) stores the power-supply-ON state or the power-supply-OFF state, when the power supplied from outside is shut off and then restarted; and
setting the power supply unit (81) to the first power supply mode if the power-supply-state storage unit (84) stores the power-supply-ON state, and setting the power supply unit (81) to the second power supply mode if the power-supply-state storage unit (84) stores the power-supply-OFF state.

10. The power supply control method according to claim 9, further comprising:
storing the power-supply-ON state if a power switch (72) is turned ON, and storing the power-supply-OFF state if the power switch (72) is turned OFF;
measuring a predetermined time using a timer (22); and
switching the power supply unit (81) from the first power supply mode to the second power supply mode if the predetermined time elapses while the power-supply-state storage unit (84) stores the power-supply-ON state.

11. The power supply control method according to claim 9 or 10, further comprising:
setting the power supply unit (81) to the first power supply mode if the power-supply-state storage unit (84) stores the power-supply-ON state; and
setting the power supply unit (81) to the second power supply mode if the power-supply-state storage unit (84) stores the power-supply-OFF state.

12. The power supply control method according to any one of claims 9 to 11, further comprising:
determining whether the communication network (15) is in a connected state;
storing the power-supply-ON state in the power-supply-state storage unit (84) if the communication network (15) is in a connected state, and storing the power-supply-OFF state in the power-supply-state storage unit (84) if the communication network (15) is not in the connected state.

13. The power supply control method apparatus according to claim 12, wherein the communication network (15) includes a telephone line (11),
the method further comprising:
determining whether the telephone line (11) is in the connected state;
storing the power-supply-ON state in the power-supply-state storage unit (84) if the telephone line (11) is in a connected state, and storing the power-supply-OFF state in the power-supply-state storage unit (84) if the telephone line (11) is not in the connected state.

14. The power supply control method apparatus according to any one of claims 10 to 13, wherein the image forming apparatus (10) further includes a setting switch (71) for setting an automatic-power-ON mode,
storing the power-supply-ON state in the power-supply-state storage unit (84) if the automatic-power-ON mode is set by the setting switch (71), and storing the power-supply-OFF state in the power-supply-state storage unit (84) if the automatic-power-ON mode is not set by the setting switch (71).
